# EUROPEAN PATENT APPLICATION

(11) **EP 2 083 546 A1**
(43) Date of publication of application: **29.07.2009**
(21) Application number: 08254034.5
(22) Date of filing: 17.12.2008
(51) Int. Cl.: H04L 29/06, G10H 1/36, G11B 27/10

(54) **A system and method for real time local music playback and remote server lyric timing synchronization utilizing social networks and wiki technology**

(30) Priority: 22.01.2008 US 17389
(71) Applicant: TuneWiki Inc., Woodland Hills, CA 91367 (US)
(72) Inventor: Sarig, Amnon, Woodland Hills, CA 91367 (US); Cohen, Ran, Tel Aviv (IL)
(74) Representative: White, Duncan Rohan

(57) **Abstract**

A method enabling a local user having a playback device (130) with a specialized player plug-in device to synchronize a display of song lyrics to a timer clock of hosting playback software and to search a remote computer system (10). The system includes a database (111) with songs and hosting playback software with an interface to enable the user to locally receive and play back lyrics and timing metadata synchronized to a local music digital file. The method includes the user sending a query to the database (111) via a proprietary software interface, searching in the database (111) for lyrics and associated synchronization information, sending lyrics and associated synchronization information back and synchronizing and displaying the lyrics by the hosting playback software and the specialized player plug-in device, thereby enabling all users to enjoy access to synchronized lyrics.

## Description

### FIELD OF THE INVENTION

The present invention relates generally to a real-time access to digital multimedia files over a communications network, and more particularly to a system, method for a remote Web site that provides a database containing synchronization timing tables utilizing prior art for 'karaoke' synchronization of music and lyrics playback.

### BACKGROUND OF THE INVENTION

Synchronization (or Sync) is a problem in timekeeping which requires the coordination of events to operate systems in unison. The familiar conductor of an orchestra serves to keep the individual players in an orchestra in time to each other and to the score. Systems operating with all their parts in synchrony are said to be synchronous or in sync.

The acoustic or electrical signal of music with vocals and the textual lyrics constitute two correlated views of the same source. In karaoke one synchronizes the lyrics to the music, so that a user can sing along. Synchronization of the audio file and text may be done with the help of alignment metadata that have been pre-stored in the audio file. Also known are the processing of karaoke media in which video and audio streams are already synchronized. The problem is not one of lyric transcription, but one of alignment. This is reasonable because textual lyrics for songs are often freely available on the Internet.

There is huge amount of music and a huge amount of lyrics. Sometimes, there is a karaoke file, but most of the time there is not. So most of the music humanity created cannot be synced to their lyrics, because making a karaoke file is labor intensive and expensive.

When a song e.g. - music with vocals, is performed the exact timing relationship of the words to the music is created. Interestingly, while the score may show general placement, the actual timing is only created when the words are sung in time with the music. This sung word to written word (lyrics) timing can only be derived later by a person carefully recording the timing relationship of each sung word to the written lyric word. This has been done with varying degrees of accuracy for a small number of songs by karaoke manufacturers. However it is very time consuming to derive this sync data. In addition to the millions of existing songs, each day thousands of new songs are published making it impossible with current techniques to provide an affordable source of synchronization data for lyrics to music.

US Pat. Appl. No. 20070166683, Dynamic lyrics display for portable media devices by Chang, et al, and assigned to Apple Computer Inc., discloses improved techniques for dynamically displaying text on a display screen of a portable media device while presenting media content are disclosed. The text being displayed is associated with and synchronized to the media content being presented. In one implementation, the dynamic nature of the text can scroll across the display screen of the portable media device. In another implementation, a part of the text being displayed can be distinguishably displayed from other parts. In one embodiment, the media content is music and the text is lyrics, whereby the portable media device can not only play music but also output synchronized lyrics.

Mobile Karaoke providers, such as Karaokini, have begun to achieve commercial success.

The value of synchronization is that it would provide an enhanced listening experience by allowing a better understanding of the poetry and meaning of the words in the context of the music itself. It would also allow physically disadvantaged people, such as deaf people, when augmented with visual and vibration stimuli, an ability to experience music in ways that they currently cannot. Furthermore, cross-cultural benefits accrue by using auto-translation of synced lyrics into the language of the listener.

Thus, it would be advantageous to provide a way to allow the vast numbers of music listeners to contribute to a lyrics social network, i.e., using the "Wiki phenomenon," where users create content.

### SUMMARY OF THE INVENTION

Accordingly, it is a principal object of the present invention to enable each listener to make a contribution to a "Wiki," such that the power of a lyrics social network allows building a database of synchronization links between music and lyrics.

A Wiki is a kind of computer software/ simple online database that allows users to create, edit, and link Web pages easily. Wiki's can create collaborative social Websites and power community Websites.

It is one other principal object of the present invention to all participants to have access to a database with the aggregated results of music linked to lyrics.

It is another principal object of the present invention to solve the "practically unsolvable" problem of millions of songs living separately from their lyrics.

It is yet another principal object of the present invention to empower social network interaction involving linked music and lyrics.

It is one other principal object of the present invention to allow real time synchronized translation by the music social network community of the present invention.

It is still another principal object of the present invention to enable the deaf to participate as much as they can in the enjoyment of the music social network community of the present invention.

It is yet still another principal object of the present invention to enable a remote user operating a computerized digital playback device, such as a personal computer, cell phone, PDA and all other similar devices over a communications network having connection to the Internet, to send a query to a remote database via proprietary software interface.

It is a further object of the present invention to provide a remote song database, searchable for the lyrics and associated synchronization information, which if found are sent back to the user. A specialized player or 'plug-in' device provided by the present invention then synchronizes the display of the lyrics to the timer clock of the hosting playback software.

It is yet a further object of the present invention to provide a system and method for real time local music playback and remote server lyric timing synchronization utilizing social networks and Wiki technology.

It is still a further object of the present invention, that if lyrics are not found, then the same software we provided will allow the user to perform a search over the Internet for said lyrics or type it himself, add the synchronization timing information using the one-click query format of the present invention, one-click or one-key pressed synchronization information gathering to add the needed synchronization data, then upload back to our remote central database over the Internet all the newly produced lyrics and synchronization data.

It is still one further object of the present invention for the same plug-in to save a local copy of the lyrics and metadata, either as a text file with the same file name as the music file and a different extension .LRC or as .KAR, which are standard extensions for such files.

It is yet still one more object of the present invention to utilize prior art to incorporate the information as metadata in the music file itself, utilizing standards such as MP3 tag 2 and similar, internationally agreed upon standards.

It is yet still one further object of the present invention to utilize prior art for the Wiki, wherein an SND² database allows follow-up users to edit synchronization information or to correct lyrics captured by a prior user and upload their modified version to the central database, thereby creating a users' community-edited database history.

A method is disclosed enabling a local user having a playback device with a specialized player plug-in device to synchronize a display of song lyrics to a timer clock of hosting playback software and to search a remote computer system. The remote computer system includes a database comprising at least a list of songs and hosting playback software with an interface to enable the user to locally receive and play back lyrics and timing metadata synchronized to a local music digital file. The method includes sending by the local user of a query to the remote database via a proprietary software interfaceor an existing software interface such as Windows Mobile Media Player with a plug-in that incoroprates the software of the present invention, searching by the system in the remote song database for the lyrics and associated synchronization information, sending the lyrics and associated synchronization information when found back to the user and synchronizing and displaying of the lyrics by the hosting playback software and the specialized player plug-in device, thereby enabling all users to enjoy access to synchronized lyrics in the playback device.

The core of the invention is a method of allowing a user to locally derive synchronization data and then for this sync data to be incorporated into a remote database for use by other users in the form of a 'social network derived sync database' or an SND² database.

US Pat. Appl. No. 20070166683 (hereinafter '66683), Dynamic lyrics display for portable media devices by Chang, et al, and assigned to Apple Computer Inc., does not provide for synching of the lyrics by a user. By contrast the present invention is primarily intended to synch the music by the user and the synch lyrics are retrieved from a central server. The present invention also provides for the social aspects of gathering the info from a player component as the server is pinged, and therefore the remote system of the present invention "knows" what songs members community are playing. '66683, by Apple is about the presentation, which varies little from some earlier karaoke patent applications.

The present invention allows for the data to be transferred over the Internet or local network to a central database containing sync data derived by other users.

A user of the present invention consciously inputs sync data by monitoring one or more data streams (lyrics, music, vibration, video, pictures, heart rate, sweat rate, brain stem activity, pulse rate, pupil dilation, muscle activity, etc.). The user then generates sync data inputs that correlate some time related derivative relative to the source data. Alternatively, the user subconsciously generates sync data using measurement sensors, which may, for example, be biometric, positional or skeletal movement related in nature. For example, on the iPhone^{™} by Apple, the user can synch the lyrics to the song by tapping on the screen of the iPhone^{™}, at the end of each line sung by the artist.

The synchronization data is, for example, derived from the lyrics of a song and the song itself. In this case the song is heard to using a local digital playback device, such as a personal computer, cell phone, PDA or any other similar device, which is Internet connected or connected to a local network. While listening to, and at the same time reading or watching the lyrics, the user enters sync timing points - the sync data. This sync data is the user's interpretation as to where the lyric/s relate in time to the song/music.

This sync data is either streamed or uploaded to a central database. This database contains many users' sync data. This sync data is accessible, subject to rules that may or may not be applied, to one, many or all users and as such forms the 'social network derived sync database,' or SND² database.

The present invention allows for SND² databases to be derived from numerous user activities, for example, but not exhaustively listening to music, exercising, meditating, jogging or networking social biometric activity. E.g., if the user can originate the sync data, then this data can be loaded into a remote database. The relationship of the sync data to the user and the synced source material forms the SND² database concept.

In an alternative embodiment the user input device for the sync data is an iPhone running the application software of the present invention. The software can be a single user application, a single user game or part of a wide area networked game application, the purpose of which is to derive sync data for incorporation into the SND² database.

The following illustrates the operation of the present invention when incorporated to allow lyrics synchronization with music:
A remote user, with a computerized digital playback device such as a personal computer, cell phone, PDA or other similar device, which has a connection to the Internet, sends a lyrics query, via interface software of the present invention, to a remote database or databases. The remote database or databases search for the lyrics and synchronization information related to them, and if found sends sync data and any other required data back to the user. A player 'plug-in' provided by the present invention then synchronizes the display of the lyrics to the timer clock of the hosting playback software and device, thus allowing the user to see the lyrics in time with the music that is being played.

The same technology also empowers the owner of the lyrics which are a derivative of copyrighted work, to remove her lyrics from our database by simply uploading a last version of the lyrics with a keyword that identify them as the owner of the lyrics and their request to remove their lyrics from the remote database; this will also prevent further uploads of another copy of the lyrics by the community. This ability provides an answer to a very expensive and time consuming current dilemma. When a copyrighted material owner contacts an Internet site owner - for example, you-tube, and asks to remove their asset from that server - for example, a user-loaded TV program. Utilization of Wiki technology by the present invention allows self-service copyright protection and obviates the need for a Web site such as you-tube to maintain a large staff to manually remove material per owners' demands.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

### BRIEF DESCRIPTION OF THE DRAWINGS

For a better understanding of the invention with regard to the embodiments thereof, reference is now made to the accompanying drawings, in which like numerals designate corresponding elements or sections throughout, and in which:
Fig. 1 is a schematic illustration of a system block diagram, constructed in accordance with the principles of the present invention;
Fig. 2 is a flow chart of the method for real time local music playback and remote server lyric timing synchronization utilizing social networks and Wiki technology, performed according to the principles of the present invention;
Fig. 3 is a flow chart of the flow of information for a system providing a remote server for real time local music playback and lyric timing synchronization, performed according to the principles of the present invention;
Fig. 4 is a flow chart of the social networking experience for a system providing a remote server for real time local music playback and lyric timing synchronization, performed according to the principles of the present invention; and
Fig. 5 is an example of how a video file will look on the user's device, in comparison to an audio file, shown in accordance with the principles of the present invention.

### DETAILED DESCRIPTION OF A PREFERRED EMBODIMENT

The principles and operation of a method and an apparatus according to the present invention may be better understood with reference to the drawings and the accompanying description, it being understood that these drawings are given for illustrative purposes only and are not meant to be limiting.

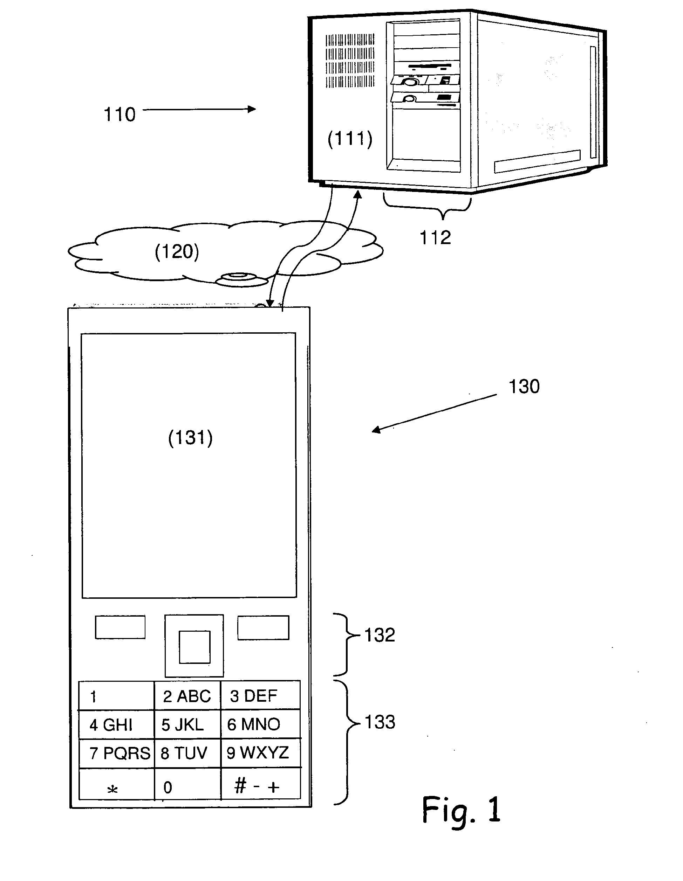

Fig. 1 is a schematic illustration of a system block diagram, constructed in accordance with the principles of the present invention. A Web server 110, preferably residing at an entrepreneurial Web site, contains a database of lyrics 111, with or without synchronization timing, as part of the embedded data. Server 110, running the application software of the present invention, sends metadata over the Internet 120 about music already loaded on a mobile phone 130, or any other exemplary end-user device. Such metadata includes lyrics, and when available, synchronization information.

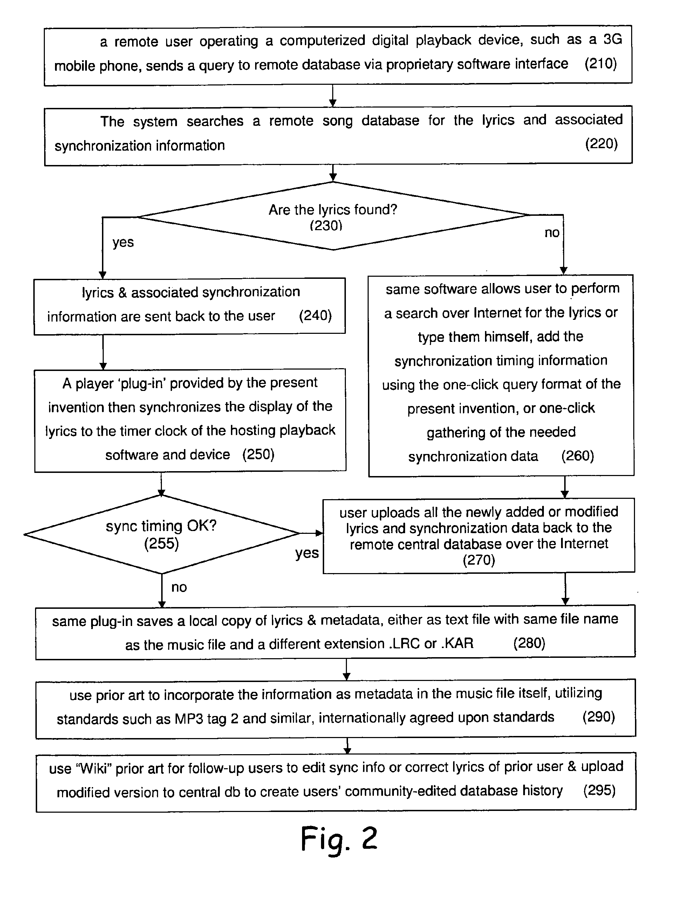

Mobile phone 130 or any other end-user device, such as a personal computer, laptop, etc., already has music loaded on it, but not the metadata associated with the lyrics and the synchronization timing. Mobile phone 130 requests such data as the name of the artist, song title or similar identifying information from the data services module 112 of Web server 110, and receives the information in return from Web server data services 112 via a proprietary plug-in device, as described with reference to Fig. 2 below. Exemplary mobile phone 130 includes a touch screen display area 131, some navigation buttons 132 and a keypad 133 to enter numbers and letters, etc.

Fig. 2 is a flow chart of the method for real time local music playback and remote server lyric timing synchronization utilizing social networks and Wiki technology, performed according to the principles of the present invention. A remote user operating a computerized digital playback device, such as a 3G mobile phone, sends a query to remote database via proprietary software interface 210.

The system searches a remote song database for the lyrics and associated synchronization information 220. If the lyrics are found 230, then the lyrics and associated synchronization information are sent back to the user 240. A player 'plug-in' provided by the present invention then synchronizes the display of the lyrics to the timer clock of the hosting playback software and device 250. If the lyrics are not found 230, then the same software allows the user to perform a search over the Internet for the lyrics or type them himself and adds the synchronization timing information using the one-click query format of the present invention, or one-click gathering of the needed synchronization data 260.

Then the user uploads all the newly produced lyrics and synchronization data back to the remote central database over the Internet 270. The same plug-in saves a local copy of lyrics and metadata, either as a text file with the same file name as the music file and a different extension .LRC or .KAR 280. Utilize prior art to incorporate the information as metadata in the music file itself, utilizing standards such as MP3 tag 2 and similar, internationally agreed upon standards 290. Utilize prior art for "Wiki," allowing follow-up users to edit synchronization information or to correct lyrics captured by a prior user and upload modified version to the central database thereby creating a users' community-edited database history 295.

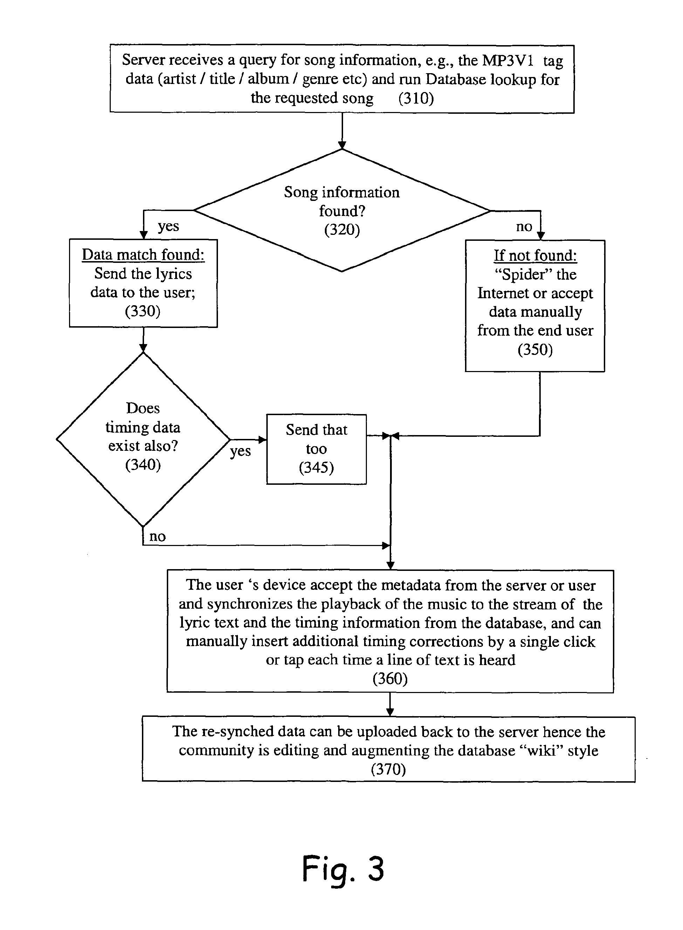

Fig. 3 is a flow chart of the flow of information for a system providing a remote server for real time local music playback and lyric timing synchronization, performed according to the principles of the present invention. The server receives a request for song information. E.g., for MP3V1 tag data (artist / title / album / genre, etc.) and run Data base lookup for the requested song 310. If a data match is found 320 send the lyrics data to the user 330. If timing data exists also 340, send it too 345.

If song information is not found, "Spider" the Internet or accept data manually from the end user 350. A Web "spider" is designed to "crawl" the Web and search out and extract desired information, data, or pictures, etc. The user 's device accepts the metadata form the server and synchronize the playback of the music to the stream of the lyric text and the timing information from the database, and can manually insert additional timing corrections by a single click or tap each time a line of text is heard 360. The re-synched data can be uploaded back to the server hence the community is editing and augmenting the database "Wiki" style 370.

Geographical data and other demographic and statistics are compiled and presented. Each user request for lyrics and timing information is recorded in real time. The requester's geographic and other demographic information is matched to the music titles they enjoy.

The information is aggregated for business intelligence and statistical information generated for the user social community. For example, a map of the US is displayed and on each state a list of the top 10 songs played today by users in that state is shown or a map is presented showing information a specific song or artist, where the music is currently popular, in real time or as an aggregate for any time or time period chosen by the viewer.

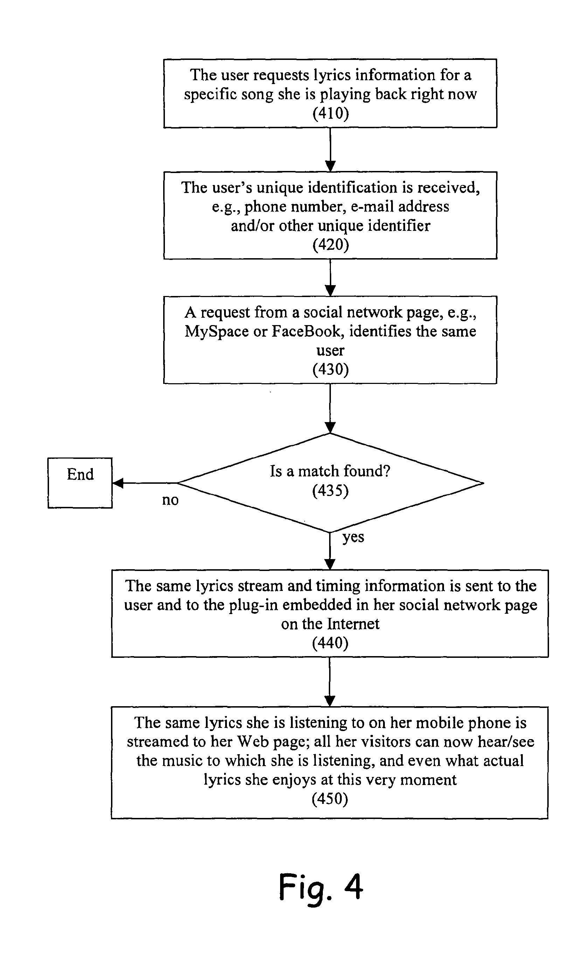

Fig. 4 is a flow chart of the social networking experience for a system providing a remote server for real time local music playback and lyric timing synchronization, performed according to the principles of the present invention. The user requests lyrics information for a specific song she is playing back right now 410. The user's unique identification is received, e.g., phone number, e-mail address and/or other unique identifier 420. A request from a social network page, e.g., MySpace^{™} or FaceBook^{™}, is identifies the same user 430.

If a match is found 435, the same lyrics stream and timing information is sent to the user and to the provided plug-in embedded in her social network page over the Internet (440); The same lyrics she is listening to on her mobile phone is streamed to her Web page. All her page visitors can now hear/see the music to which she is listening, and even what actual lyrics she enjoys at this particular moment.

In addition to the remote search local play back of the lyrics and synchronization, the remote server allow registration and collection of demographic data about the user, either by direct log in or by cooperation with cell phone or Internet provides companies or by estimation of region by the IP address.

The demographic data or the interest in certain topics inferred by the users' history of music listening habits and musical taste, and the type of device used for the play back, is then utilized to empower an insertion of advertising message within the lyrics downloaded from the remote server. For example, if our specialized plug-in reports to us that the user is utilizing iPhone^{™} which is a relatively expensive device with specific target audience, that information can then be utilized to tailor advertising communication targeting such user demographics.

Utilizing prior art of close captioning our invention also empower TV producers to add automatically synchronized lyrics in the close captioning area of the screen, or in a rolling screen footer, synchronizing the lyrics display by using our remote database automatically and synchronizing it to the station production master clock, saving countless hours of manual labor needed to provide such service.

Optionally, there is an additional use for the gathered database of lyrics and the proprietary gathering of timing information, which is to enable an additional service for the deaf. By synchronizing the display of the lyrics line to the playback, even when the deaf can not hear the song, he or she can enjoy the song subject to their disability limitation, by adding a rhythmic vibration to the playback device. For example, if the playback device is a cell phone equipped with a vibrating mode, the present invention synchronizes the vibration of the device to the playback music, while concurrently synchronizing the words of the lyrics.

In US Pat. Appl. No. US20070166683, Apple Computer discloses the highlighting of each word, as the word plays back. The Apple patent application does not differ substantially from how Karoke files are played today. By contrast, the present invention simply shows each line of information when it plays on the timeline of the song, and gives a vibrating cue that the next word is now being played.

Since the present invention uses Wiki technology to gather synchronization timing for a song, the community us enabled, via the same services, to translate the lyrics of the song to languages other than the one in which the song is being performed. Alternatively, the lyrics can be translated automatically in the first run, allowing the wiki users to make corrections at a later stage. This enables internationalization of every song performed, since the user can choose to read the lyrics in a different language than the language un which the song is performed, thereby enhancing the cultural experience of foreign song playback in a language the user can understand, and vice versa. This allows a user who knows the language in which the song is performed, to read and synchronize the same lyrics in a different language for convenience or for educational purposes.

Real time GPS supported map of where songs are played around you: When a mobile device is equipped with GPS the server of the present invention registers the physical location of the user if he chooses to share this information. Once the present invention knows physically where each song is played, this enables a service wherein another user asks 'what songs are playing now on the street where I am?' or 'Where is the nearest person listening to the same song I am listening to at this moment?'

The present invention can develop into social networking. For example, two people can find each other and they do so by playing the same song and getting the system to get them together.

The system can merge with mapping software. The system can show mapping services, for example, Google Earth, with highlighting of a physical location of a specific song now being played back, or search for songs that are most popular in a specific physical location, in real time.

Another social network ability using the present invention enables two people to see the exact same song lyrics ay the same moment in two different locations and sing together. For example, using a service such as Skype^{™} with the "plug-in" of the present invention software, two or more chatting people can be synchronized to see and hear the exact same song in two or more physical locations.

Social network utilization of the real time data of the present invention provides knowledge of what music each user is listening to as they download the lyrics timing synchronization from the database. This enables offering of multiple services based on that fact gathering, such as:
who else, and how many people, anywhere in the world, are listening to this exact song at this moment?;
what is the most popular song playing at this moment on cell phones in London?; and
matchmaking: enables users to search for other people based on their musical taste and the catalog of songs they played in the last few days or months.

An additional opportunity for learning and enhancing the enjoyment of a song performed is the ability to reverse the process of synchronization. Once the present invention collects the timing of each lyric verse and can match it to the song playback, this enables the users to mix and rearrange the lyrics in any way they care to do. Then a user can play back the song based on the lyric timing collected. For example, the following John Lennon song "Imagine" can be re-mixed by the user by moving the words around and playback of the original singer, with a completely different meaning to that famous song:
Imagine there's no heaven
It's easy if you try
No hell below us
Above us only sky
Imagine all the people
Living for today...

One may randomly edit this lyric and plays back John Lennon singing things like:
Imagine easy if you try today...
Only sky No hell
Living for only hell

This editing ability is a new artform. It has some similarity to DJ's scratching vinyl records and the sampling techniques that transformed contemporary music in the 1990's.

People sometimes make mistakes when they sing a song, as they may not have the lyrics next to them. The wiki will allow users to insert their "mistakes" into special files and users will be able to choose to view a file that contains the "mistakes" next to the original file.

Yet another exemplary optional use of the present invention provides for synchronizing the lyrics to a music video stream. For example, YouTube^{™} may be presenting a live music concert. The lyrics might be 90% the same as the original version, but the timing is typically different for a video version or a live version of a song. The community comprising the users of the present invention may start with the existing lyrics for the song, and then sync it as a separate version to the video stream from YouTube^{™}_{.}

Further examples of SDN² database applications:
SND2 application in Lyric/Music editing
Using sync data it is also possible to cross edit the lyrics and music of one song with another song. This is provided by an alternative embodiment of the present invention.

Using the SND² database, lyric database and a music database, a user could edit lyrics from John Lennon's 'Imagine' with those from Paul McCartney's 'Yesterday.' The lyric edit points provide the sync timing start points for the music edit sync points. A further enhancement would be for software to analyze the timbre, tempo and cadence for each segment and then using standard Digital Signal Processing (DSP) techniques to adjust the timbre, tempo and cadence of each segment to optimize the music segment to segment and by so doing optimize the musicality of the 'new' derived song. Often it will sound awful but also often it will sound new and interesting. This is a new art form.

The user can then upload the sync data and any DSP metadata to the SND² database for further editing by other users of that Social Network.

### SND² usage in picture editing

A user decides on the generation of sync data for a lyric and song. He decides, for example, that when the word 'love' occurs in the lyric that they would like to see a picture of their dog on the video display or their digital display device. When the word 'hate' occurs that they would like to see a picture of their country's President. He uses their locally derived sync data to mark picture edit points for his visual display and tag the pictures he has chosen. He can upload the pictures, sync data and lyrics to the remote SDN² database where he can choose to allow access to this data to himself, selected users or to everyone accessing that database.

A further example would be a user deriving the lyric sync data for a pop video and then using the lyric editing software to edit the video and/or to cross edit between songs and pop videos using lyric sync data to derive the video edit points.

### SND2 usage in video display control for deaf

An SDN² database enables a deaf user to see the lyrics of a song synchronized to a video display representative of the emotions of the song and also to tactile stimulation as might be provided by a physical device such as a skin contact vibration device.

Lyrics are poetry set to sound. Sync data from an SND² database enables a fuller experience of a song for a deaf user than is otherwise available.

A user analyzes a song's music using software for amplitude, tempo, timbre and cadence in the time domain. The analyzed values are mapped to give brightness, color, complexity, rate of change, vibration intensity and vibration frequency. The time data, sync data and the analyzed display data are loaded into an SDN² database.

A deaf user with a PDA may access the song using, for example, an enhanced iPhone. The lyrics display. As they scroll past, the display changes in sync with the analyzed metadata derived from the song and the iPhone vibrates in sync as well. If his wife encoded the sync data when the 'lyric' goes past, then she can also encode a picture of herself or their child.

### SDN2 usage in exercise

An affluent venture capital (VC) entrepreneur is jogging along a beach. His heart monitor has been mapped so that it varies the sync data for his favorite tune, a Spanish folk song. As he exercises his heart rate changes the tempo of the song. He's also a member of the VC international exercise group.

Various buddies of his in this group and people he does not yet know are all exercising at the same time. There are a lot of VC's in the world. Our guy can see his exercise rate and also the exercise rate of others in his group all via the sync data SND² database. He can exercise on his own at his preferred rate/music tempo, he can exercise against the group sync average or he can choose a buddy.

He chooses a Tai Kwan Do expert who is exercising on the other side of the world. This guy does not like Spanish folk music. In fact we do not know what he likes, but he has mapped his heart rate against his chosen music and its sync data and these two buddies just go for it. One pounds up and down the beach and the other pounds an exercise dummy. They match and compete on exercise rates, listening to different music but having a shared SDN² experience.

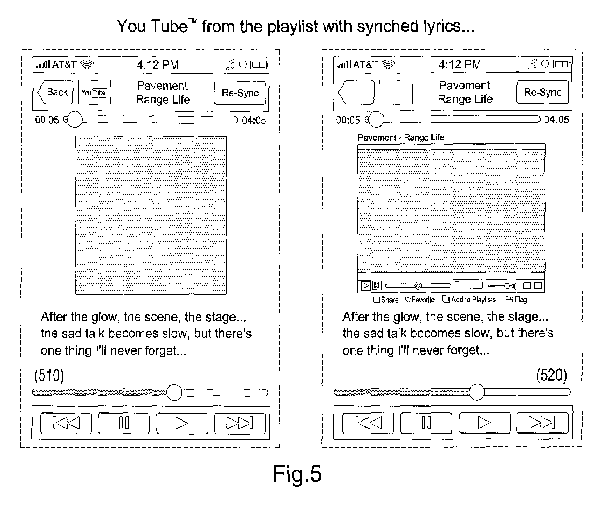

Fig. 5 is an example of how a video file will look on the user's device, in comparison to an audio file, shown in accordance with the principles of the present invention. A user scans the list of audio files in a music player to find and input video streams within the application, thereby enabling an option to choose to stream the video instead of playing the audio file, while displaying /or not displaying the lyrics synchronized alongside the video stream. Similarly to the audio file, if a video clip is not synchronized with lyrics, the user will be able to synch it from the display or from the desktop application. Fig.5 shows two examples of songs downloaded from YouTube^{™} videos, 510 and 520.

Alternatively, the user adds a name of an artist and/or the name of the song/movie/video to the list of audio files, where although there is no audio file, the application will use the information to find and bring a video clip to the application.

Having described the present invention with regard to certain specific embodiments thereof, it is to be understood that the description is not meant as a limitation, since further modifications will now suggest themselves to those skilled in the art, and it is intended to cover such modifications as fall within the scope of the appended claims.

## Claims

1. A method enabling a local user having a playback device with a specialized player plug-in device to synchronize a display of song lyrics to a timer clock of hosting playback software and to search a remote computer system via an electronic network, said remote computer system comprising:
a remote database comprising at least songs; and
hosting playback software with an interface to enable the user to locally receive and play back lyrics and timing metadata synchronized to a local music digital file, said method comprising:
sending by the local user of a query to the remote database via a proprietary software interface;
searching by the system in the remote song database for the lyrics and associated synchronization information;
sending the lyrics and associated synchronization information when found back to the user; and
synchronizing and displaying of the lyrics by the hosting playback software and the specialized player plug-in device,
thereby enabling all user to enjoy access to synchronized lyrics in the playback device.

2. The method according to claim 1, further comprising modifying/adding to the lyrics and synchronization information, and uploading by the user of all new/modified lyrics and synchronization information back to the remote central database over the Internet.

3. The method according to claim 1 or 2, wherein said user generated synchronization information uses Wiki technology, thereby enabling rapid exponential gathering of synchronization information, thereby saving time, money and other resources.

4. The method according to claim 1, 2 or 3, wherein said database further comprises a timing database and said playback software provides means for enabling the lyrics to be heard in one language and read in another language.

5. The method according to any one preceding claim, wherein the playback device further comprises a GPS capability and the remote computer further comprises a real time social networking engine, and thereby said method further comprise finding where a song is played physically and creating a connection with others who have the same musical taste.

6. The method according to claim 5, wherein said GPS capability further enables GPS business intelligence for where a song is played and what song is being played in a specific location.

7. The method according to any one preceding claim, wherein said database further comprises a thesaurus database to link words and phrases in the lyrics to emotive pictures and emoticons.

8. The method according to any one preceding claim, further comprising displaying one of a photo and a video synced to the lyrics using the derived synchronization information.

9. The method according to claim 8, wherein said one of a photo and a video comprises the image of the user's loved one whenever the word 'love' is in the lyrics.

10. The method according to claim 8 or 9, wherein said one of a photo and a video further comprises a slogan, wherein said lyrics comprises one of a word and a phrase linked to one of politics, current affairs and charity.

11. The method according to claim 8, 9 or 10, further comprising frequency analyzing the music and using the results to alter the color cast of the one of a photo and a video.

12. The method according to claim 8, 9 or 10, further comprising tempo analyzing the music and using the results to set the color cast of the one of a photo and a video cross-fade edit speed.

13. The method according to any one preceding claim, further comprising using said thesaurus to re-invent the lyrics on the fly and displaying both the original lyrics and the re-invented lyrics.

14. The method according to any one preceding claim, wherein the electronic network is the Internet.

15. The method according to any one preceding claim, further comprising synchronizing the lyrics to a music video stream.
